# EUROPÄISCHE PATENTSCHRIFT

(11) **EP 3 601 853 B1**
(45) Veröffentlichungstag und Bekanntmachung des Hinweises auf die Patenterteilung: **24.03.2021**
(21) Anmeldenummer: 18706705.3
(22) Anmeldetag: 19.02.2018
(51) Int. Cl.: F16J 15/3256

(54) **DICHTUNGSEINRICHTUNG**
SEALING DEVICE
DISPOSITIF D'ÉTANCHÉITÉ

(30) Priorität: 22.03.2017 DE 102017204857
(43) Veröffentlichungstag der Anmeldung: 05.02.2020
(73) Patentinhaber: ZF Friedrichshafen AG, 88046 Friedrichshafen (DE)
(72) Erfinder: MAURITZ, Wolfgang, 94034 Passau (DE)
(74) Vertreter: ZF Friedrichshafen AG
(86) Internationale Anmeldenummer: PCT/EP2018/053967
(87) Internationale Veröffentlichungsnummer: WO 2018/171995

(56) Entgegenhaltungen:
- EP-A1- 3 078 886
- EP-A1- 3 078 887
- EP-A2- 1 055 850

## Beschreibung

Die Erfindung bezieht sich auf eine Dichtungseinrichtung zwischen einem drehfesten Bauteil und einem um eine Drehachse drehbaren Bauteil, mit einer in eine zylindrische Ausnehmung des drehbaren Bauteils eingesetzten Kassettendichtung, die einen Innenring aufweist, der aus einem formstabilen Stützring und einem darauf angebrachten Elastomerteil besteht, wobei der Innenring über einen ringartigen Bereich des Elastomerteils fest auf einem zylindrischen Bereich des drehfesten Bauteils angeordnet ist, mit einem formstabilen Außenring der Kassettendichtung, der mit einem rohrförmigen Bereich in die zylindrische Ausnehmung des drehbaren Bauteils drehfest eingesetzt ist, mit einem an dem Außenring drehfest angeordneten Dichtelement, das eine radial umlaufende Dichtlippe aufweist, die unter der Vorspannung einer Wurmfeder in Anlage an der äußeren Mantelfläche eines rohrförmigen Bereichs des formstabilen Stützrings gehalten ist, mit einem radialen Flansch des formstabilen Stützrings, der von dem rohrförmigen Bereich des Stützrings radial nach außen ragt und an dem das Elastomerteil radial nach außen geführt ist und an seinem radial äußeren Endbereich mehrere Schmutzlippen axial nebeneinander aufweist, die an der radial inneren Seite des rohrförmigen Bereichs des Außenrings in Anlage sind. Insbesondere bei einer Anwendung der Dichtungseinrichtung in einer schmutzigen Umgebung, wie es bei Baumaschinen oder Landwirtschaftlichen Maschinen der Fall ist, sollen die Schmutzlippen ein Eindringen von Schmutz und Feuchtigkeit in die zylindrische Ausnehmung verhindern. Da die Schmutzlippen bei Drehung des drehbaren Bauteils entlang an der radial inneren Seite des rohrförmigen Bereichs des Außenrings gleiten, kommt es bei Schutzbeaufschlagung von außen zu einem Schmirgeln des Schmutzes an den Schmutzlippen und damit zu deren Verschleiß sowie einem Nachlassen der Schutzfunktion der Schmutzlippen.

Aus der EP 3 078 887 A1 ist eine Dichtung zum Abdichten einer Kammer zwischen einem rotierenden und einem feststehenden Element bekannt. Ein erster Ring der Dichtung ist mit dem rotierenden Element verbunden und ein zweiter Ring ist mit dem feststehenden Element verbunden. Ein erstes ringförmiges Elastomerelement wird vom ersten Ring getragen und definiert eine erste ringförmige Dichtlippe, die mit dem zweiten Ring zusammenwirkt, um dem Eindringen äußerer Verunreinigungen in die Kammer entgegenzuwirken. Ein zweites ringförmiges Elastomerelement wird vom zweiten Ring getragen und definiert eine zweite ringförmige Dichtlippe, die mit dem ersten Ring zusammenwirkt, um dem Austritt von Schmiermittel entgegenzuwirken. Ein dritter Ring ist mit dem zweiten Ring gekoppelt ist und erstreckt sich von diesem in Richtung der Achse der Dichtung. Eine dritte ringförmige Dichtlippe ragt aus dem ersten Elastomerelement heraus und wirkt mit dem dritten Ring zusammen, um dem Durchgang äußerer Verunreinigungen zur ersten Dichtlippe entgegenzuwirken.

Aufgabe der Erfindung ist es daher eine Dichtungseinrichtung der eingangs genannten Art zu schaffen, die einfach aufgebaut ist und die stabiler gegen eine Abnutzung der Schmutzlippen ist.

Diese Aufgabe wird erfindungsgemäß dadurch gelöst, dass eine Zusatzschmutzlippe an der radial inneren Seite des rohrförmigen Bereichs des Außenrings in Anlage ist, die zu dem Elastomerteil verdrehgesichert sowie axial beweglich ist und einen Begrenzungsanschlag aufweist, der axial aus der zylindrischen Ausnehmung des drehbaren Bauteils herausragt, wobei das drehfeste Bauteil eine flanschartige Erweiterung aufweist und zwischen der flanschartigen Erweiterung und dem Mündungsbereich der zylindrischen Ausnehmung des drehbaren Bauteils ein Spalt gebildet ist.

Durch die Zusatzschmutzlippe werden die Schmutzlippen weitgehend gegen eine direkte Beaufschlagung von Schmutz geschützt und verschleißen dadurch in wesentlich geringerem Maß. Damit die axial bewegliche Zusatzschmutzlippe sich nicht aus der Kassettendichtung herausbewegen kann, kann sie sich über den Begrenzungsanschlag an der flanschartigen Erweiterung des drehfesten Bauteils abstützen. Das Herausragen des Begrenzungsanschlags aus der zylindrischen Ausnehmung des drehbaren Bauteils verhindert ein aneinander Schleifen von drehendem und drehfestem Bauteil. Durch die Verdrehsicherung der Zusatzschmutzlippe kann es nicht zu einem Schleifen des Begrenzungsanschlags an der flanschartigen Erweiterung des drehfesten Bauteils kommen kann.

Axiale Toleranzen zwischen dem drehfesten Bauteil und dem drehbaren Bauteil werden durch die erfindungsgemäße Lösung auf einfache Weise kompensiert.

Einfach montierbar kann die Zusatzschmutzlippe formschlüssig gegenüber dem Elastomerteil verdrehgesichert sein.

Dazu kann in einfach aufgebauter und leicht montierbarer Weise das Elastomerteil ein oder mehre zu Begrenzungsanschlag hin gerichtete Noppen aufweisen, die in zum Elastomerteil hin offene Ausnehmungen des Begrenzungsanschlags hineinragen.

Vorzugsweise ist die Zusatzschmutzlippe federnd auf die flanschartigen Erweiterung des drehfesten Bauteils zu beaufschlagt.

Dazu können in einfacher Ausbildung die radial äußeren Flächen der Noppen ausgehend von dem dem radialen Flansch des Stützrings näheren Ende der Noppen zu dem dem radialen Flansch des Stützrings entfernten freien Ende der Noppen zur Drehachse hin geneigt und die den radial äußeren Flächen der Noppen gegenüberliegenden Wände der offene Ausnehmungen des Begrenzungsanschlags der Neigung der äußeren Flächen der Noppen entsprechend zur Drehachse hin geneigt sein. Dadurch wird der Begrenzungsanschlag zwangsläufig in Richtung zur flanschartigen Erweiterung des drehfesten Bauteils hin bewegt und damit der Spalt zwischen dem Begrenzungsanschlag und der flanschartigen Erweiterung des drehfesten Bauteils gering gehalten oder sogar eliminiert. Damit kann auch kaum Schmutz von außen an dem Begrenzungsanschlag vorbeigelangen.

Es versteht sich, dass in kinematischer Umkehrung auch die radial inneren Flächen der Noppen und diesen radial inneren Flächen der Noppen radial gegenüberliegende Flächen der Zusatzschmutzlippe aneinander anliegen können.

Es ist dazu aber auch möglich, dass die Noppen elastisch federnd ausgebildet sind.

Dabei können die radial äußeren Flächen der Noppen mit radialer Vorspannung an den ihnen gegenüberliegenden Wänden der offenen Ausnehmungen des Begrenzungsanschlags in Anlage sein.

Zur Reduzierung der Bauteile und damit auch des Montageaufwandes können die Noppen einteilig mit dem Elastomerteil ausgebildet sein.

Der Begrenzungsanschlag kann axial federnd in Anlage an der flanschartigen Erweiterung des drehfesten Bauteils in Anlage sein.

Ist der Begrenzungsanschlag als radial umlaufender Ring ausgebildet, so kann weitestgehend kein Schmutz von außen an dem Begrenzungsanschlag vorbeigelangen.

Bestehen die Zusatzschmutzlippe und der Begrenzungsanschlag aus einem hoch abriebfesten Werkstoff, so kommt es nur in geringem Maß zu einem schmirgelnden Abrieb von Zusatzschmutzlippe und Begrenzungsanschlag durch den Schmutz, so dass diese Teile die Schmutzlippen lange vor einem größeren Verschleiß schützen.

Dazu können die Zusatzschmutzlippe und der Begrenzungsanschlag aus einem Polyurethan bestehen.

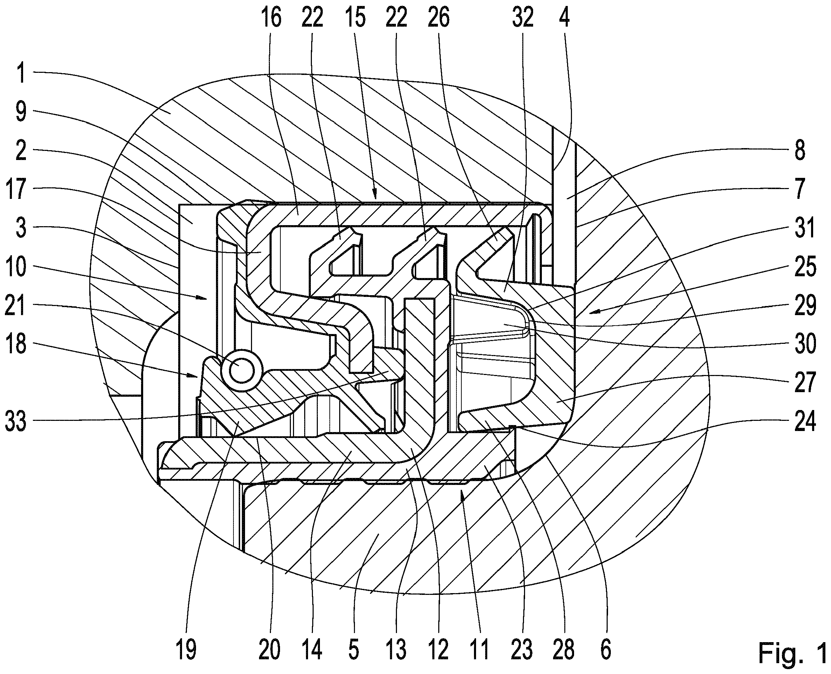

Ein Ausführungsbeispiel der Erfindung ist in der Zeichnung dargestellt und wird im Folgenden näher beschrieben. Die einzige Figur der Zeichnung zeigt einen Ausschnitt einer Dichtungseinrichtung im Längsschnitt.

Die in der Figur dargestellte Dichtungseinrichtung weist eine Nabe 1 als um eine Drehachse drehbares Bauteil auf, die eine koaxiale zylindrische Ausnehmung 2 besitzt. Diese topfartig mit einem Ringboden 3 versehene Ausnehmung 2 mündet mit ihrem dem Ringboden 3 entgegengesetzten Ende nach Außen, wobei sich die Außenwand 4 der Nabe 1, in die die Ausnehmung mündet, sich radial erstreckt.

In die zylindrische Ausnehmung 2 ragt koaxial ein ein drehfestes Bauteil bildender Zapfen 5, wobei außerhalb der Ausnehmung 2 der Zapfen 5 über einen Radius 6 in eine flanschartige Erweiterung 7 übergeht und ein Spalt 8 geringer Breite zwischen der zueinander parallel sich erstreckenden Außenwand 4 der Nabe 1 und der flanschartigen Erweiterung 7 gebildet ist.

Zwischen dem Zapfen 5 und der radial umlaufenden Wand 9 der Ausnehmung 2 ist eine Kassettendichtung 10 angeordnet, die einen Innenring 11 besitzt. Der Innenring 11 weist einen L-förmigen Stützring 12 aus einem Metall mit einem darauf angebrachten Elastomerteil 13 auf. Der eine Schenkel des "L" des Stützrings 12 erstreckt sich koaxial, während der andere Schenkel des "L" sich radial nach außen erstreckt. Über einen ringartigen Bereich 14 des Elastomerteils 13 ist der koaxiale Schenkel des "L" des Stützrings 12 und damit der Innenring 11 fest auf dem Zapfen 5 angeordnet.

Weiterhin weist die Kassettendichtung 10 einen etwa U-förmigen Außenring 15 aus einem Metall auf, der einen sich koaxial erstreckenden radial äußeren rohrförmigen Bereich 16 besitzt, der drehfest in die Ausnehmung 2 der Nabe 1 eingesetzt ist. Der Boden 17 des "U" des Außenrings ist zu dem Ringboden 3 der Ausnehmung 2 gerichtet.

Auf der dem Ringboden 3 der Ausnehmung 2 zugewandten Seite des Außenrings 15 ist an dem Außenring 15 ein ringförmiges Dichtelement 18 aus einem elastischen Werkstoff angebracht, das eine radial umlaufende, radial nach innen gerichtete Dichtlippe 19 besitzt, die in Anlage an der äußeren Mantelfläche 20 ist. Zur festen Anlage der Dichtlippe 19 an der äußeren Mantelfläche 20 steht die Dichtlippe 19 unter der Vorspannung einer Wurmfeder 21.

Auf der nach außen gerichteten Seite des einen radialen Flansch bildenden radialen Schenkels des "L" des Stützrings 12 ist das Elastomerteil 13 radial nach außen geführt. An seinem radial äußeren Endbereich besitzt das Elastomerteil zwei axial im Abstand nebeneinander angeordnete Schmutzlippen 22, die an der radial inneren Seite des rohrförmigen Bereichs 16 des Außenrings 15 in Anlage sind.

Das Elastomerteil 13 weist einen über den ringartigen Bereich 14 des Elastomerteils 13 und den koaxialen Schenkel des "L" des Stützrings 12 zur flanschartigen Erweiterung 7 hin hervorstehenden Elastomerring 23 auf. Die zylinderartige, radial umlaufende Mantelfläche des Elastomerrings 23 besitzt an ihrem der flanschartigen Erweiterung 7 zugewandten Ende eine radial nach außen gerichtete umlaufende Ringkante 24.

Die Dichtlippe 19 besitzt einen oder mehrere gleichmäßig am Umfang verteilte Puffer 33 , die axial zu dem radialen Flansch des Stützrings 12 hin gerichtet sind und eine axiale Bewegungsmöglichkeit von Innenring 11 und Außenring 15 zueinander begrenzen.

Auf der der flanschartigen Erweiterung 7 zugewandten Seite der nach außen gerichteten Seite des radialen Schenkels des "L" des Stützrings 12 ist ein axial bewegliches Zusatzschmutzlippenelement 25 angeordnet, das eine annähernd den Schmutzlippen 22 entsprechende Zusatzschmutzlippe 26 aufweist, die ebenfalls an der radial inneren Seite des rohrförmigen Bereichs 16 des Außenrings 15 in Anlage ist.

Die Zusatzschmutzlippe 22 geht radial nach innen in einen ringartigen Begrenzungsanschlag 27 über, der über die Ebene der radial umlaufenden Wand 9 der Nabe 1 hinaus aus der Ausnehmung 2 bis oder bis nahe der flanschartigen Erweiterung 7 herausragt.

An seinem radial inneren Bereich weist der Begrenzungsanschlag 27 einen Ring 28 auf, der axial zum Inneren der Ausnehmung 2 ragt und den Elastomerring 23 umschließt, wobei er auch auf der Ringkante 24 in Auflage ist.

Zwischen der Zusatzschmutzlippe 26 und dem Ring 28 weist das Zusatzschmutzlippenelement 25 axial zum Inneren der Ausnehmung 2 hin offene Ausnehmungen 29 auf, die radial umlaufend gleichmäßig verteilt an dem Zusatzschmutzlippenelement 25 ausgebildet sind.

In die offenen Ausnehmungen 29 ragen zum Begrenzungsanschlag 27 hin gerichtete Noppen 30 des Elastomerteils 13 hinein.

Die radial äußeren Flächen 31 der Noppen 30 sind, ausgehend von dem dem radialen Schenkel des "L" des Stützrings 12 näheren Ende der Noppen 30 zu dem der flanschartigen Erweiterung 7 zugewandten Ende zur Drehachse hin geneigt und liegen mit diesen Flächen 31 an Wänden 32 der offenen Ausnehmungen 29 an, die entsprechend der Flächen 31 zur Drehachse hin geneigt sind.

In Umfangsrichtung liegen die Noppen an den Seitenwänden der offenen Ausnehmungen an.

Das Zusatzschmutzlippenelement 25 besteht aus einem Polyurethan.

### Bezugszeichen

- 1: Nabe
- 2: Ausnehmung
- 3: Ringboden
- 4: Außenwand
- 5: Zapfen
- 6: Radius
- 7: flanschartige Erweiterung
- 8: Spalt
- 9: Wand
- 10: Kassettendichtung
- 11: Innenring
- 12: Stützring
- 13: Elastomerteil
- 14: ringartiger Bereich
- 15: Außenring
- 16: rohrförmiger Bereich
- 17: Boden
- 18: Dichtelement
- 19: Dichtlippe
- 20: äußere Mantelfläche
- 21: Wurmfeder
- 22: Schmutzlippen
- 23: Elastomerring
- 24: Ringkante
- 25: Zusatzschmutzlippenelement
- 26: Zusatzschmutzlippe
- 27: Begrenzungsanschlag
- 28: Ring
- 29: offene Ausnehmungen
- 30: Noppen
- 31: äußere Flächen
- 32: Wand
- 33: Puffer

## Patentansprüche

1. Dichtungseinrichtung zwischen einem drehfesten Bauteil (5) und einem um eine Drehachse drehbaren Bauteil (1), umfassend das drehfeste Bauteil (5) und das drehbare Bauteil (1), mit einer in eine zylindrische Ausnehmung (2) des drehbaren Bauteils eingesetzten Kassettendichtung (10), die einen Innenring (11) aufweist, der aus einem formstabilen Stützring (12) und einem darauf angebrachten Elastomerteil (13) besteht, wobei der Innenring (11) über einen ringartigen Bereich (14) des Elastomerteils (13) fest auf einem zylindrischen Bereich des drehfesten Bauteils angeordnet ist, mit einem formstabilen Außenring (15) der Kassettendichtung (10), der mit einem rohrförmigen Bereich (16) in die zylindrische Ausnehmung (2) des drehbaren Bauteils drehfest eingesetzt ist, mit einem an dem Außenring (15) drehfest angeordneten Dichtelement (18), das eine radial umlaufende Dichtlippe (19) aufweist, die unter der Vorspannung einer Wurmfeder (21) in Anlage an der äußeren Mantelfläche (20) eines rohrförmigen Bereichs des formstabilen Stützrings (12) gehalten ist, mit einem radialen Flansch des formstabilen Stützrings (12), der von dem rohrförmigen Bereich des Stützrings (12) radial nach außen ragt und an dem das Elastomerteil (13) radial nach außen geführt ist und an seinem radial äußeren Endbereich mehrere Schmutzlippen (22) axial nebeneinander aufweist, die an der radial inneren Seite des rohrförmigen Bereichs (16) des Außenrings (15) in Anlage sind, wobei eine Zusatzschmutzlippe (26) an der radial inneren Seite des rohrförmigen Bereichs (16) des Außenrings (15) in Anlage ist, die zu dem Elastomerteil (13) verdrehgesichert ist, **dadurch gekennzeichnet, dass** die Zusatzschmutzlippe (26) zu dem Elastomerteil (13) axial beweglich ist und einen Begrenzungsanschlag (27) aufweist, der axial aus der zylindrischen Ausnehmung (2) des drehbaren Bauteils herausragt, wobei das drehfeste Bauteil eine flanschartige Erweiterung (7) aufweist und zwischen der flanschartigen Erweiterung (7) und dem Mündungsbereich der zylindrischen Ausnehmung (2) des drehbaren Bauteils ein Spalt (8) gebildet ist.

2. Dichtungseinrichtung nach Anspruch 1, **dadurch gekennzeichnet, dass** die Zusatzschmutzlippe (26) formschlüssig gegenüber dem Elastomerteil (13) verdrehgesichert ist.

3. Dichtungseinrichtung nach Anspruch 2, **dadurch gekennzeichnet, dass** das Elastomerteil (13) ein oder mehre zum Begrenzungsanschlag (27) hin gerichtete Noppen (30) aufweist, die in zum Elastomerteil (13) hin offene Ausnehmungen (29) des Begrenzungsanschlags (27) hineinragen.

4. Dichtungseinrichtung nach Anspruch 3, **dadurch gekennzeichnet, dass** die radial äußeren Flächen (31) der Noppen (30) ausgehend von dem dem radialen Flansch des Stützrings (12) näheren Ende der Noppen (30) zu dem dem radialen Flansch des Stützrings (12) entfernten freien Ende der Noppen (30) zur Drehachse hin geneigt sind und die den radial äußeren Flächen (31) der Noppen (30) gegenüberliegenden Wände (32) der offene Ausnehmungen (29) des Begrenzungsanschlags (27) der Neigung der äußeren Flächen (31) der Noppen (30) entsprechend zur Drehachse hin geneigt sind.

5. Dichtungseinrichtung nach einem der Ansprüche 3 und 4, **dadurch gekennzeichnet, dass** die Noppen (30) elastisch federnd ausgebildet sind.

6. Dichtungseinrichtung nach Anspruch 4, **dadurch gekennzeichnet, dass** die radial äußeren Flächen (31) der Noppen (30) mit radialer Vorspannung an den ihnen gegenüberliegenden Wänden (32) der offenen Ausnehmungen (29) des Begrenzungsanschlags (27) in Anlage sind.

7. Dichtungseinrichtung nach einem der Ansprüche 3 bis 6, **dadurch gekennzeichnet, dass** die Noppen (30) einteilig mit dem Elastomerteil (13) ausgebildet sind.

8. Dichtungseinrichtung nach einem der vorhergehenden Ansprüche, **dadurch gekennzeichnet, dass** der Begrenzungsanschlag (27) axial federnd in Anlage an der flanschartigen Erweiterung (7) des drehfesten Bauteils in Anlage ist.

9. Dichtungseinrichtung nach einem der vorhergehenden Ansprüche, **dadurch gekennzeichnet, dass** die Zusatzschmutzlippe (26) und der Begrenzungsanschlag (27) aus einem hoch abriebfesten Werkstoff besteht.

10. Dichtungseinrichtung nach Anspruch 9, **dadurch gekennzeichnet, dass** die Zusatzschmutzlippe (26) und der Begrenzungsanschlag (27) aus einem Polyurethan besteht.

## Claims

1. Seal device between a rotationally fixed component (5) and a component (1) which can be rotated about an axis of rotation, comprising the rotationally fixed component (5) and the rotatable component (1), having a cassette seal (10) which is inserted into a cylindrical cutout (2) of the rotatable component and which has an inner ring (11) which is composed of a dimensionally stable support ring (12) and an elastomeric part (13) mounted thereon, the inner ring (11) being arranged fixedly on a cylindrical region of the rotationally fixed component by way of an annular region (14) of the elastomeric part (13), having a dimensionally stable outer ring (15) of the cassette seal (10), said outer ring being inserted, with a tubular region (16), in a rotationally fixed manner into the cylindrical cutout (2) of the rotatable component, having a sealing element (18) which is arranged in a rotationally fixed manner on the outer ring (15) and which has a radially circumferential sealing lip (19) which is held in abutment against the outer lateral surface (20) of a tubular region of the dimensionally stable support ring (12) under the preload of a worm spring (21), having a radial flange of the dimensionally stable support ring (12), which radially outwardly protrudes from the tubular region of the support ring (12) and on which the elastomeric part (13) is radially outwardly guided and which has, on the radially outer end region thereof, a plurality of dirt lips (22) which are alongside one another in the axial direction and which are in abutment against the radially inner side of the tubular region (16) of the outer ring (15), an additional dirt lip (26) being in abutment against the radially inner side of the tubular region (16) of the outer ring (15), said additional dirt lip being secured against rotation with respect to the elastomeric part (13), **characterized in that** the additional dirt lip (26) is axially movable with respect to the elastomeric part (13) and has a delimiting stop (27) which protrudes axially out of the cylindrical cutout (2) of the rotatable component, the rotationally fixed component having a flange-like widening (7) and a gap (8) being formed between the flange-like widening (7) and the opening region of the cylindrical cutout (2) of the rotatable component.

2. Seal device according to Claim 1, **characterized in that** the additional dirt lip (26) is secured against rotation in a positively locking manner in relation to the elastomeric part (13).

3. Seal device according to Claim 2, **characterized in that** the elastomeric part (13) has one or more nubs (30) which are directed toward the delimiting stop (27) and which protrude into cutouts (29) of the delimiting stop (27), said cutouts being open toward the elastomeric part (13).

4. Seal device according to Claim 3, **characterized in that** the radially outer surfaces (31) of the nubs (30), proceeding from that end of the nubs (30) which is closer to the radial flange of the support ring (12) to that free end of the nubs (30) which is remote from the radial flange of the support ring (12), are inclined toward the axis of rotation, and those walls (32) of the open cutouts (29) of the delimiting stop (27) which lie opposite the radially outer surfaces (31) of the nubs (30), correspondingly to the inclination of the outer surfaces (31) of the nubs (30), are inclined toward the axis of rotation.

5. Seal device according to either of Claims 3 and 4, **characterized in that** the nubs (30) are of elastically resilient configuration.

6. Seal device according to Claim 4, **characterized in that** the radially outer surfaces (31) of the nubs (30) are in abutment, with radial preload, against those walls (32) of the open cutouts (29) of the delimiting stop (27) which lie opposite them.

7. Seal device according to one of Claims 3 to 6, **characterized in that** the nubs (30) are of one-part configuration with the elastomeric part (13).

8. Seal device according to one of the preceding claims, **characterized in that** the delimiting stop (27) is in axially resilient abutment against the flange-like widening (7) of the rotationally fixed component.

9. Seal device according to one of the preceding claims, **characterized in that** the additional dirt lip (26) and the delimiting stop (27) are composed of a highly wear-resistant material.

10. Seal device according to Claim 9, **characterized in that** the additional dirt lip (26) and the delimiting stop (27) are composed of a polyurethane.

## Revendications

1. Dispositif d'étanchéité entre un composant fixe en rotation (5) et un composant rotatif autour d'un axe de rotation (1), comprenant le composant fixe en rotation (5) et le composant rotatif (1), muni d'un joint à cassette (10) inséré dans un évidement cylindrique (2) du composant rotatif, qui comprend un anneau intérieur (11), qui est constitué par un anneau de support (12) de forme stable et une partie en élastomère (13) disposée sur celui-ci, l'anneau intérieur (11) étant agencé de manière fixe sur une zone cylindrique du composant fixe en rotation par l'intermédiaire d'une zone de type annulaire (14) de la partie en élastomère (13), muni d'un anneau extérieur (15) de forme stable du joint à cassette (10), qui est inséré de manière fixe en rotation par une zone de forme tubulaire (16) dans l'évidement cylindrique (2) du composant rotatif, muni d'un élément d'étanchéité (18) agencé de manière fixe en rotation sur l'anneau extérieur (15), qui comprend une lèvre d'étanchéité (19) s'étendant radialement sur la circonférence, qui est maintenue en appui sur la surface d'enveloppe extérieure (20) d'une zone de forme tubulaire de l'anneau de support (12) de forme stable sous la prétension d'un ressort à boudin (21), muni d'une bride radiale de l'anneau de support (12) de forme stable, qui se projette radialement vers l'extérieur à partir de la zone de forme tubulaire de l'anneau de support (12) et sur laquelle la partie en élastomère (13) est guidée radialement vers l'extérieur et qui comprend sur sa zone d'extrémité radialement extérieure plusieurs lèvres antisalissure (22) axialement juxtaposées, qui sont en appui sur le côté radialement intérieur de la zone de forme tubulaire (16) de l'anneau extérieur (15), une lèvre antisalissure supplémentaire (26) étant en appui sur le côté radialement intérieur de la zone de forme tubulaire (16) de l'anneau extérieur (15), qui est protégée contre la torsion par rapport à la partie en élastomère (13), **caractérisé en ce que** la lèvre antisalissure supplémentaire (26) est mobile axialement par rapport à la partie en élastomère (13) et comprend une butée de limitation (27), qui dépasse axialement de l'évidement cylindrique (2) du composant rotatif, le composant fixe en rotation comprenant un élargissement de type bride (7) et une fente (8) étant formée entre l'élargissement de type bride (7) et la zone d'embouchure de l'évidement cylindrique (2) du composant rotatif.

2. Dispositif d'étanchéité selon la revendication 1, **caractérisé en ce que** la lèvre antisalissure supplémentaire (26) est protégée contre la torsion par rapport à la partie en élastomère (13) par accouplement de forme.

3. Dispositif d'étanchéité selon la revendication 2, **caractérisé en ce que** la partie en élastomère (13) comprend une ou plusieurs nopes (30) orientées vers la butée de limitation (27), qui pénètrent dans des évidements (29), ouverts vers la partie en élastomère (13), de la butée de limitation (27).

4. Dispositif d'étanchéité selon la revendication 3, **caractérisé en ce que** les surfaces radialement extérieures (31) des nopes (30) sont inclinées par rapport à l'axe de rotation à partir de l'extrémité des nopes plus proche de la bride radiale de l'anneau de support (12) vers l'extrémité libre des nopes (30) éloignée de la bride radiale de l'anneau de support (12), et les parois (32), opposées aux surfaces radialement extérieures (31) des nopes (30), des évidements ouverts (29) de la butée de limitation (27) sont inclinées par rapport à l'axe de rotation en correspondance avec l'inclinaison des surfaces extérieures (31) des nopes (30).

5. Dispositif d'étanchéité selon l'une quelconque des revendications 3 et 4, **caractérisé en ce que** les nopes (30) sont configurée sous forme élastique.

6. Dispositif d'étanchéité selon la revendication 4, **caractérisé en ce que** les surfaces radialement extérieures (31) des nopes (30) sont en appui avec une prétension radiale sur les parois (32), opposées à celles-ci, des évidements ouverts (29) de la butée de limitation (27) .

7. Dispositif d'étanchéité selon l'une quelconque des revendications 3 à 6, **caractérisé en ce que** les nopes (30) sont configurées d'un seul tenant avec la partie en élastomère (13).

8. Dispositif d'étanchéité selon l'une quelconque des revendications précédentes, **caractérisé en ce que** la butée de limitation (27) est en appui de manière axialement élastique sur l'élargissement de type bride (7) du composant fixe en rotation.

9. Dispositif d'étanchéité selon l'une quelconque des revendications précédentes, **caractérisé en ce que** la lèvre antisalissure supplémentaire (26) et la butée de limitation (27) sont constituées d'un matériau hautement résistant à l'abrasion.

10. Dispositif d'étanchéité selon la revendication 9, **caractérisé en ce que** la lèvre antisalissure supplémentaire (26) et la butée de limitation (27) sont constituées d'un polyuréthane.
